# EUROPEAN PATENT APPLICATION

(11) **EP 1 974 905 A1**
(43) Date of publication of application: **01.10.2008**
(21) Application number: 08380077.1
(22) Date of filing: 07.03.2008
(51) Int. Cl.: B32B 5/18, B32B 5/28, B32B 27/32, B32B 17/02, B29C 47/06, B29C 70/02, C08L 23/02, B29C 43/30, B29C 43/24, B29C 51/14

(54) **Thermoformable stratified panel and method for obtaining it**

(30) Priority: 16.03.2007 ES 200700701
(71) Applicant: Ribawood, S.A., 50004 Zaragoza (ES)
(72) Inventor: Rivera Ballarin, Carlos, 50004 Zaragoza (ES)
(74) Representative: Carpintero Lopez, Francisco

(57) **Abstract**

Thermoformable stratified panel formed by one central layer or matrix (1) composed of mixtures of polyolefins and organic fibres, which may be foamed, coated with two external layers or sheets (2) and (3) composed of polyolefins and mineral fillers, a decorative multi-layer film (4) made of polyolefins, which is abrasion-resistant, and an external layer (5) made of glass fibre and polyester and/or cellulosic mesh fabrics; the central layer (1) being formed by means of a co-extrusion process, and foamed by physical or chemical means, or a combination thereof, and the external layers (2) and (3) are formed simultaneously with the central layer by co-extrusion, the panel being reinforced during the calendering process of the co-extruded multi-layer sheet with the decorative multi-layer film (4) and the layer (5) of glass fibre and polyester and/or cellulosic mesh fabrics.

## Description

### OBJECT OF THE INVENTION

The present invention relates to a thermoformable laminated or stratified panel, composed by a central layer that may be foamed and at least two complementary external layers, said stratified compound being externally reinforced by various materials, such as glass and polyester and/or cellulosic mesh fabric.

The present invention also relates to the method used to manufacture these thermoformable stratified panels, by means of a co-extrusion process and calendering of the sheets.

The object of the invention is, therefore, to provide a new panel composed by several layers of materials made of mixtures of polyolefins and organic fillers, which have improved properties, thus allowing for application in the formation of panels for interior vehicle doors, trays, packing containers, etc.

### BACKGROUND OF THE INVENTION

Most of the stratified panels currently being manufactured following various methods and procedures which, as mentioned above, have an application, for example, in the formation of the internal layers of vehicles, trays and other similar components, consist of organic materials and polymers with organic fillers, which may be formed by heat.

Due to their structure and the components whereof they are composed, these panels exhibit various physical-mechanical properties that do not precisely include resistance, since said resistance may be considered to be relatively low, which leads to them being easily deformed and deteriorated by the application of various types of mechanical actions.

Moreover, one must bear in mind that the aforementioned laminated panels exhibit an exterior surface with a final finishing that does not make it possible to use them or apply them directly, thus making it necessary to perform complementary processes to the general method of obtaining them in order to achieve a higher quality and a better appearance of the product obtained; this entails additional costs in the elaboration of the stratified compound and, consequently, increases the price of the final product.

Most of these traditional thermoformable stratified panels are consist of several layers of different types of compounds which give them a high specific weight, a characteristic which may impose limitations on their applications.

To all of this, one must add the fact that most of these laminated panels are formed by materials which, in general, are difficult to recycle. This may occasionally represent a significant drawback for companies manufacturing them or using them as components of their products, as the new environmental policies applied in various fields are well-known.

As mentioned above, there are different types of panels in the market, such as that disclosed in French patent with publication no. 2690221, which is formed by a central part composed of three superimposed layers, arranged so that they intersect with the wooden poles of the adjacent layer or layers; the layers being made of materials such as plastics, fibres, cellulosic materials and polyolefin resins.

### DESCRIPTION OF THE INVENTION

The thermoformable stratified panel proposed by the invention resolves in a wholly satisfactory manner the problems described above regarding the various aspects discussed, since it is a different laminar structure obtained by means of a co-extrusion process starting from components that make it possible to achieve better qualities and characteristics than those of traditional panels.

More specifically, the thermoformable stratified panel disclosed in this invention is formed by a central layer, or matrix, consisting of mixtures of polyolefins and organic fillers; this central layer may be foamed in order to reduce its specific weight, which does not modify the physical-mechanical characteristics; these properties are the direct result of the different external layers and the fabric reinforcements applied following extrusion, as explained further below.

The surface of this intermediate layer is coated with two external layers, which, in turn, are composed of materials such as polyolefins and mineral fillers; one of the external layers of this stratified panel being externally reinforced with glass fibre and polyester and/or cellulosic mesh fabric, which allows for use as external reinforcement for other different, thicker nuclei, whilst another external layer may or may not have an abrasion-resistant decorative multi-layer film.

The complex thus manufactured has the advantage of being a material that can be completely recycled, and 100% of the milling thereof may be incorporated into the central layer, thus increasing the physical-mechanical properties thereof with the incorporation of the external fibres of the glass fibre and/or polyester and/or cellulosic fabric. Thus, the reinforcement provided by the organic fibres is increased.

The matrix or central layer is formed by means of a co-extrusion process, by means of a co-rotating extruder. Foaming of this intermediate layer is performed physically, chemically or by a mixture of both systems, depending on the desired final density. On the other hand, the external layers are formed simultaneously with the central layer by co-extrusion.

Following extrusion, calendering of the co-extruded multi-layer sheet takes place, thus obtaining a complex the composition whereof could be the following: polyolefins + organic fibres + recycling of the complex / polyolefins + mineral fibres + NW glass fibre or cellulose fabrics + multi-layer film. Using the NW glass fibre fabric is justified as reinforcement for the complex and is embedded by the calender in the external layer polymer. Use of cellulose fabrics makes it possible to form a bond between the complex and other, larger cores by affinity towards gluing, welding, etc. On the surface, a complex plastic film formed by two or more layers may be applied in order to improve abrasion and obtain decorative effects.

The panels obtained with the method of the invention are susceptible to being moulded or not by means of thermoforming, finally adopting the desired form, and allowing for their application to obtain panels for interior vehicle doors, trays, containers, etc., all this by means of softening and pressing by thermo-forming, as well as being external coatings for other thicker cores, as reinforcements therefor.

The stratified panels thus obtained exhibit a series of advantages such as being 100% recyclable, which makes it possible to reuse them in the manufacturing of more panels; furthermore, panels are obtained with better mechanical properties, greater rigidity, greater impact resistance and a lower thermal resistance coefficient than the polymer, which increases their mouldability. Furthermore, it provides a plastic finish to both faces, which favours the direct application thereof and lowers the cost of the parts.

### DESCRIPTION OF THE DRAWINGS

In order to complement the description being carried out and to contribute to a better understanding of the characteristics of the invention, in accordance with a preferred embodiment thereof, as an integral part of said description, a drawing is attached which, in an illustrative and not limitative character, schematically represents a thermoformable stratified panel of this invention, where one may observe the possible layers forming the laminar structure, obtained following the co-extrusion process that is also an object of the invention.

### PREFERRED EMBODIMENT OF THE INVENTION

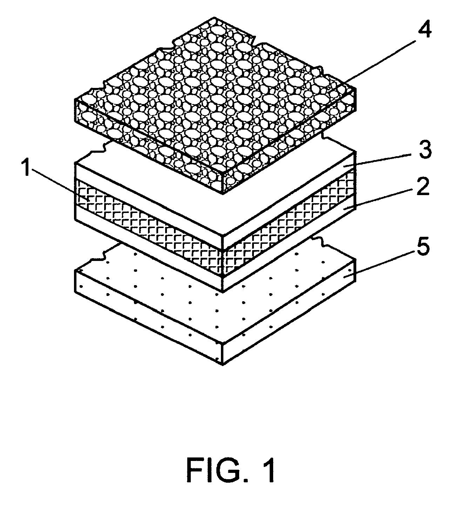

In view of the figure mentioned above, one may observe that the thermoformable stratified panel disclosed in this invention is formed by a central layer or matrix (1) composed of mixtures of polyolefins and organic fibres, for example in a 50% proportion, and two external layers or sheets (2) and (3) made of polyolefins and mineral fillers in a percentage of, for example, 60% / 40%. Furthermore, this structure is coated with external reinforcements or layers consisting of glass fibre or cellulosic fabrics (4), with a decorative multi-layer film that improves abrasion, or a cellulosic fabric (5). This external protection makes it possible to use the panels as external reinforcements for other, thicker cores of a different type.

The matrix or central layer (1) may be foamed, such that it has a lower specific weight, which does not affect the physical-mechanical properties, which are directly linked to the other two external layers (2) and (3) that coat it.

The main, central layer (1) is formed by means of a co-rotating extruder machine which is fed with a mixture prepared in a Pallman-type agglomerator where the organic fibres, pre-mixed with the polyolefins, are previously homogenised and softened, following dosing, by means of gravimetric scales, of the polymer and the filler of organic fibres of the polymer and the filler of organic fibres with a mean granulometry of 250 microns.

On the other hand, the two external layers (2) and (3), which surround the central layer (1), are formed simultaneously with the central layer following a co-extrusion process, using the co-rotating co-extruder. The outermost layers (4) and (5), consisting of the fabric reinforcements, are applied subsequent to the extrusion process, during calendering of the co-extruded multi-layer sheet.

The foam of the central layer (1) is produced by means of physical or chemical means, or a mixture thereof, depending on the desired final density of the layer. Said central layer (1) may also be formed by the complete recycling of the stratified complex formed following the process described above. To do so, it will be necessary to first condition this recyclable material, by means of milling and crushing operations, until it confers the suitable properties to be used.

In this manner, one will obtain a stratified panel which, without the external layers (decorative films, glass fibre, polyester or cellulosic fabrics), has characteristics with the following results, listed below, which should not be understood to be limitative of the scope of the invention:
- Density, according to ISO 1183: 1.8 g/cc.
- Distortion temperature, according to ISO 75/A, long.: 92.5°C / 91.9°C.
- Traction resistance, according to ISO 8527, type-i beaker 5 mm/min long.: 22.3 N/mm² / 18.3 N/mm².
- Elongation to break, according to ISO 8527, type-i beaker 5 mm/min long.: 10.i % - 5.6 % long., 53.6 N/mm² / 46.3 N/mm².
- Deflection resistance, according to ISO 178, long.: 1,600 N/mm²/1,550 N/mm².
- Elastic modulus to deflection, according to ISO 178: 0.4 %.
- Water absorption: 23°C > 3.0 J.
- Charpy impact resistance, according to ISO 179: -30°C > 3.0.

## Claims

1. Thermoformable stratified panel, **characterised in that** it has a stratified structure formed by a matrix or central layer (1) consisting of homogeneous mixtures of polyolefins and organic fibres, coated with two external layers (2) and (3) composed of polyolefins and mineral fillers, this stratified panel being externally reinforced by a decorative abrasion-resistant multi-layer film (4) and glass fibre and polyester and/or cellulosic mesh fabrics (5).

2. Thermoformable stratified panel, according to claim 1, **characterised** that the matrix or central layer (1) is foamed, thus decreasing the specific weight of the laminar structure.

3. Thermoformable stratified panel, according to the preceding claims, **characterised in that** the central layer (1) is formed by recycled material from other similar laminar structures previously conditioned for that purpose.

4. Method of obtaining the thermoformable stratified panel, according to the preceding claims, **characterised in that** it consists of the co-extrusion of a material formed by a central layer (1), which may be foamed, coated with two external layers (2) and (3), starting from a homogenised, agglomerated mixture of polyolefins, organic fillers and mineral fillers, following dosing, by means of gravimetric scales, of the polymer and the organic fillers and fibres, and reinforced during the calendering process of the co-extruded multi-layer sheet, with two other layers (4) and (5) composed of a decorative, abrasion-resistant, multi-layer film and glass fibre and polyester and/or cellulosic mesh fabrics.

5. Method of obtaining the thermoformable stratified panel, according to claim 4, **characterised in that** the central layer (1) is foamed by means of physical or chemical processes, or a combination thereof.
